# EUROPEAN PATENT SPECIFICATION

(11) **EP 3 872 004 B1**
(45) Date of publication and mention of the grant of the patent: **04.09.2024**
(21) Application number: 20159766.3
(22) Date of filing: 27.02.2020
(51) Int. Cl.: B65G 1/00, B65G 1/04, B66F 9/07

(54) **A MINI LOAD CRANE FOR USE IN AN AUTOMATED WAREHOUSE AND A METHOD FOR STORING AND PICKING GOODS IN THE AUTOMATED WAREHOUSE**
MINILASTANKRAN ZUR VERWENDUNG IN EINEM AUTOMATISIERTEN LAGER UND VERFAHREN ZUM LAGERN UND KOMMISSIONIEREN VON WAREN IN EINEM AUTOMATISIERTEN LAGER
MINI GRUE DE CHARGEMENT DESTINÉE À ÊTRE UTILISÉE DANS UN ENTREPÔT AUTOMATISÉ ET PROCÉDÉ POUR STOCKER ET PRÉLEVER DES MARCHANDISES DANS L'ENTREPÔT AUTOMATISÉ

(43) Date of publication of application: 01.09.2021
(73) Proprietor: Texo AB, 343 24 Älmhult (SE)
(72) Inventor: Lindblom, Bo, 283 36 Osby (SE)
(74) Representative: Hansson Thyresson AB

(56) References cited:
- EP-A2- 0 302 205
- EP-A2- 1 357 062
- US-A1- 2006 182 551
- US-A1- 2018 127 212
- US-A1- 2020 039 747

## Description

### TECHNICAL FIELD

The present invention relates to a mini load crane for use in an automated warehouse having a plurality of rows, wherein the rows extend vertically in a plurality of levels, and are arranged in parallel in a horizontal direction to form a rack.

### BACKGROUND

A mini load crane can be used to convey goods in an automated warehouse in which goods are stored on a plurality of storage shelves arranged in parallel in the vertical and horizontal directions. The goods can be containers, boxes, cartons and trays and other similar objects. It is common that the mini load crane travels in an aisle on a track provided along the storage shelves for goods, and by using a driving device to raise and lower a cage, goods can be transferred between arbitrary levels of storage shelves.

Some space normally needs to left be free on some shelves, so as to allow goods, such as boxes or cartons, to be re-arranged when goods are not directly available in a storage shelf. As a result, the warehouse is not used in the most efficient way.

From the above it is understood that there is room for improvements and the invention aims to solve or at least mitigate the above and other problems.

EP0302205A2 discloses a driverless conveying vehicle provided with two rack towers and discloses the preamble of claim 1.

US2018/127212A1 discloses a hybrid modular storage fetching system.

US2006/182551A1 discloses a storage and retrieval unit comprising a lifting table and a buffer store.

US2020/039747A1 discloses a method and apparatus for a human picker on a picker vehicle.

EP1357062A2 discloses a satellite car and a shelf storage for such a satellite car.

### SUMMARY

An object of the present invention is to provide a new type of mini load cranes which is improved over prior art and which eliminates or at least mitigates the drawbacks discussed above. These objects are achieved by the technique set forth in the appended independent claims with preferred embodiments defined in the dependent claims related thereto. Additional advantages will be set forth in part in the description which follows or may be learned by practice.

The invention is defined in the independent claims. Preferable features are defined in the dependent claims.

According to the invention the disclosed mini load crane comprises a multilayer first elevator for supporting goods at a plurality of levels, and a second elevator supporting a shuttle. The mini load crane is used in a multi storeys automated warehouse. The shuttle can move into storage rows of the multi storeys automated warehouse to pick up and to place goods. The shuttle is also arranged to bring the picked-up goods to the mini load crane and to place the goods at a level of the multilayer elevator. After receiving goods, the multilayer elevator is displaced horizontally, so as to be able to receive further goods at another level. Thus, goods can be stored intermediately at a plurality of levels of the mini load crane, for instance during re-arranging of goods in the warehouse. The mini load crane can be moved in the warehouse while supporting goods at a plurality of levels.

In a first aspect of the disclosure, there is disclosed mini load crane for use in an automated warehouse having a plurality of rows, wherein the rows extend vertically in a plurality of levels, and are arranged in parallel in a horizontal direction to form a rack, said mini load crane comprising a first vertical side section and a second vertical side section spaced apart from and arranged in parallel with said first side section, said first vertical side section and said second vertical side section having a height; a multilayer intermediate storage device arranged in a vertical space between said first vertical side section and said second vertical side section, wherein each level of said multilayer intermediate storage device is provided with a goods support device; a goods elevator extending along and outside said vertical space, wherein the goods elevator is arranged to be moved vertically and stopped at different levels in line with the levels of the rack for picking up and storing goods in the rack, and at different levels in line with the levels of said multilayer intermediate storage device for picking up and storing goods in the intermediate storage device; and at least one motor for moving the mini load crane along the rack and perpendicularly to the rows.

In another aspect of the disclosure, there is disclosed a mini load crane for use in an automated warehouse having a plurality of rows, wherein the rows extend vertically in a plurality of levels, and are arranged in parallel in a horizontal direction to form a rack, said mini load crane comprising a first vertical side section and a second vertical side section spaced apart from and arranged in parallel with said first side section, said first vertical side section and said second vertical side section having a height; a multilayer elevator arranged in a vertical space between said first vertical side section and said second vertical side section, wherein each level of said multilayer elevator is provided with a goods support; a goods elevator comprising a shuttle support and extending along and outside said vertical space, wherein the goods elevator can be moved vertically and stopped at different levels where the shuttle support is in line with the levels of the rack for allowing the shuttle to move into and out from the rack; and at least one motor for moving the mini load crane along the rack and perpendicularly to the rows.

In a further aspect of the disclosure, there is disclosed a method for storing and picking goods in an automated warehouse having a plurality of rows, wherein the rows extend vertically in a plurality of levels, and are arranged in parallel in a horizontal direction to form a rack, comprising placing goods in a goods elevator extending exterior on a mini load crane; vertically moving the goods elevator to vertical positions corresponding to free spaces in a multilayer intermediate storage device extending vertically inside said mini load crane; moving the goods horizontally from the goods elevator to a position in the multilayer intermediate storage device for placing the goods; moving the mini load crane in a horizontal direction to a selected row of the automated warehouse;
picking up goods from a selected horizontal position in the multilayer intermediate storage device; vertically moving the goods elevator to a vertical position corresponding to a free space in the rack; placing the goods in the free space in the rack; and repeating the above steps in a reversed order for picking goods from the rack.

### BRIEF DESCRIPTION OF THE DRAWINGS

The accompanying drawings, which are incorporated in and constitute a part of this specification, illustrate embodiments and together with the description, serve to explain non-limiting examples of the methods and systems of the inventive concept. In the drawings,
- Fig. 1: is a schematic top view of an automated warehouse,
- Fig. 2: is a schematic perspective and simplified view of a mini load crane for use in the automated warehouse of Fig. 1,
- Fig. 3: is a schematic front view of a mini load crane showing a cage and a rotating support (swivel wreath) for a shuttle,
- Fig. 4: is a schematic side view of the mini load crane of Fig. 3,
- Fig. 5: is a schematic side view of a shuttle that can be carried by the disclosed mini load crane,
- Fig. 6: is a schematic top view with partly cut off portions of the shuttle in Fig. 5,
- Fig. 7: is a schematic side view showing a support beam supporting a shuttle,
- Fig. 8: is a schematic side view of an eccentric lifting mechanism in three different lifting positions,
- Fig. 9: is a schematic perspective view of the automated warehouse of Fig. 1 where a mini load crane is supporting a shuttle moving into the warehouse,
- Fig. 10: is a schematic perspective view of the automated warehouse of Fig. 3 where the shuttle is moving goods picked up in the warehouse onto the mini load crane,
- Fig. 11: is a schematic side elevation view of the mini load crane showing an unloading and loading process,
- Fig. 12: is a schematic top view of the mini load crane of Fig. 11,
- Fig. 13: is a schematic side elevation view of the mini load crane in position in an automated warehouse,
- Fig. 14: is a schematic side elevation view of a first alternative not according to the invention of a mini load crane, and
- Fig. 15: is a schematic side elevation view of a second alternative not according to the invention of a mini load crane.

### DETAILED DESCRIPTION

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. The embodiments herein are provided by way of example so that this disclosure will be thorough and complete, and will fully convey the scope of the inventive concept, and that the claims be construed as encompassing all equivalents of the present inventive concept which are apparent to those skilled in the art to which the inventive concept pertains. If nothing else is stated, different embodiments may be combined with each other.

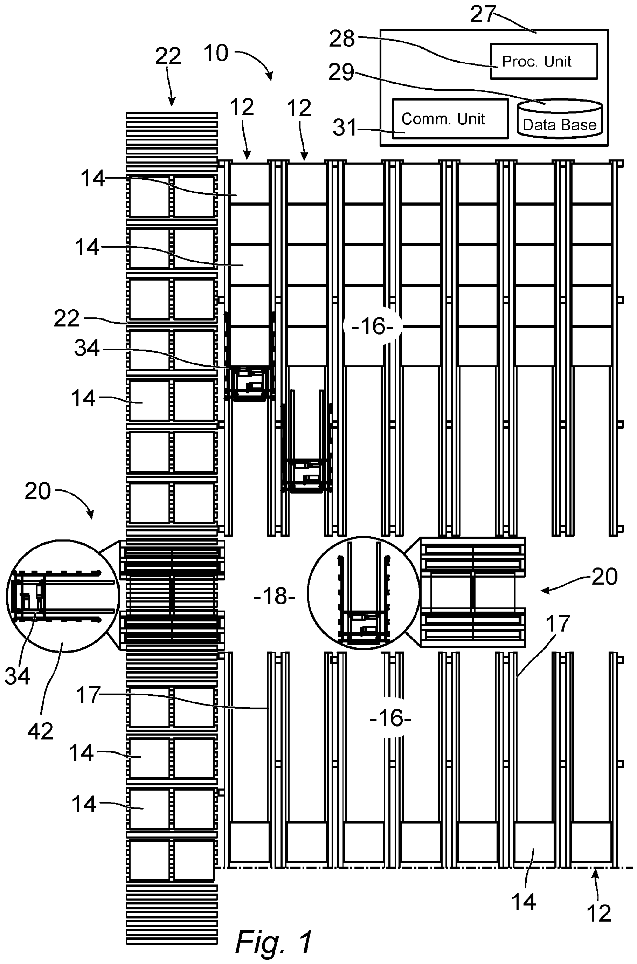

Fig. 1 shows an automated warehouse 10 with a plurality of rows 12 with storage locations for goods 14 on shelves. The rows extend vertically in a plurality of levels and in parallel in a horizontal direction to form a rack 16. A transport aisle 18 extends perpendicular to the rows between two opposite racks 16. A mini load crane 20 is arranged to move back and forth along the transport aisle 18. Goods will be transported to and from the racks 16 by a conveyor 22. In the embodiment shown in Fig. 1, the conveyor 22 is provided below an outer and lowest section of the racks. In various embodiments, the conveyor 22 is provided at other levels and/or at other locations in relation to the racks. A shuttle 34 can be supported by rotating support 42 that is arranged on the mini load crane 20 and can also move into and out from the rows carrying goods 14. The goods 14 is supported on storage tracks 17 in the racks 16.

The mini load crane 20 is controlled by a central control unit 27 comprising a processing unit 28, a data base unit 29, and a communication unit 31. A similar control unit referred to as a crane control unit 33 is provided on the mini load crane 20. The central control unit 27 communicates with the crane control unit 33 through the communication unit 31 and a similar communication device in the crane control unit 33. Preferably, all communication is done with wireless communication, such as different radio systems. Data relating to positions of all goods stored in the automated warehouse and to goods specific information are stored and continuously updated in the database unit 29 by the processing unit 28.

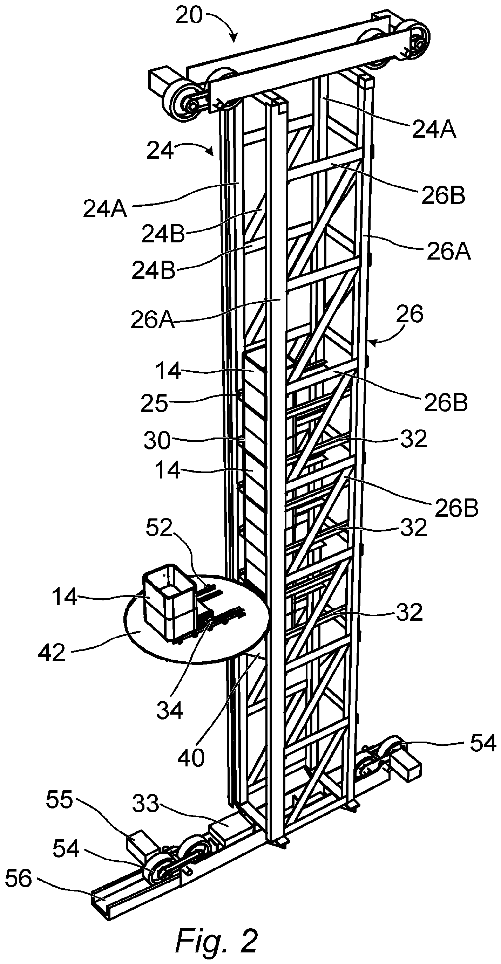

With reference to Fig. 2 to Fig. 7, embodiments and applications of the disclosed mini load crane 20 are shown. The mini load crane 20 extends vertically and is approximately as high as the racks. It comprises a first vertical section 24 and a second vertical section 26 arranged so as to form a vertically extending space therebetween. A multilayer intermediate storage device 25 comprising a multilayer elevator 30 is provided between said first vertical section 24 and said second vertical section 26. On each layer of the multilayer intermediate storage device 25 there is provided a goods support arrangement 32. In various embodiments, the goods support arrangement 32 comprises track sections on which goods can be placed. The track sections can also support a shuttle 34 when goods are placed or removed from the multilayer intermediate storage device 25. The multilayer intermediate storage device 25 comprises at least two layers with track sections. In various embodiments, the multilayer intermediate storage device 25 comprises four to ten layers with track sections. The goods 14 can be containers, boxes, cartons and trays and other similar objects.

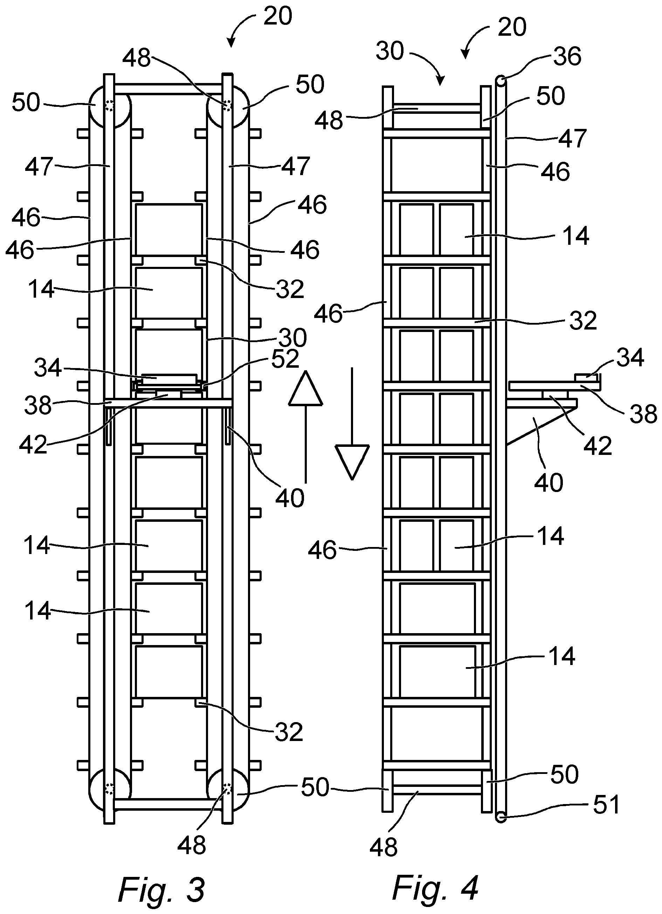

The multilayer elevator 30 comprises a first set of endless belts 46 that run over upper and lower shafts 48 with pulleys 50. There are four endless belts 46 and four shafts 48. The four endless belts 46 extend over approximately the full height of the mini load crane 20 and each belt 46 extends along a corner of the vertical space provided between the first vertical section 24 and the second vertical section 26. As shown in Fig. 3 and Fig. 4, the four endless belts 46 are provided with a plurality of goods support arrangements 32 with track sections spaced apart at equal distances along the endless belts 46. Goods 14 can be supported by opposing track sections that are within the vertically extending space of the mini load crane 20 on opposite endless belts 46. Those sections of the endless belts 46 that carry goods are referred to as driving portions while opposite sections not carrying goods are referred to as return portions. As shown in Fig. 3 and Fig. 4, goods support arrangements 32 are provided along the full length of the endless belts 46. In various embodiments, goods support arrangements 32 are provided only along a limited section of the endless belts 46. The limited section at least corresponds to at least six goods support arrangement 32, thus capable of storing six pieces of goods 14 (or twelve pieces of smaller goods).

A goods elevator 36 is provided on the outside of the vertical space provided between the first vertical section 24 and the second vertical section 26. The goods elevator 36 comprises a shuttle support 38 supporting the shuttle 34 when the goods elevator 36 moves up and down in front of a row in the rack. The shuttle support 38 also supports the shuttle 34 during placing goods 14 in and removing goods 14 from the goods support arrangement 32 in the multilayer elevator 30. The goods elevator 36 comprises also a lift cage 40 connected to a set of elevator endless belts 47, and a rotating support 42. The elevator endless belts 47 is supported and driven by drive wheels 51 arranged at a top section of the mini load crane 20 and at a bottom section, respectively. After placing goods at one level in the multilayer elevator 30, further goods 14 can be picked up from the same level of the rack or from another level after activating the goods elevator 36. If no change of level is required, another box or any other type of goods will be picked up by the shuttle. The shuttle is then moved back to the rotating support 42. If required, the multilayer elevator can be activated and the picked-up goods can be moved by the shuttle 34 into the goods support arrangements 32 at a level where there is space available after rotation of the rotating support 42 90 degrees. In various embodiments, the lift cage 40 is guided by vertically arranged rails of the mini load crane 20. Such an arrangement will stabilize the lift cage 40 when the elevator endless belts 47 moves up and down.

In various embodiments, the first set of endless belts 46 and the elevator endless belts 47 are rubber block chains with a plurality of tooth like interconnected blocks. The blocks will allow fastening of the goods support arrangements 32 to the first set of endless belts 46, and of the lift cage 40 to the elevator endless belts 47, respectively.

The schematic view of the mini load crane 20 of Fig. 2 is shown without elevators, belt and pulleys. The shuttle support 38 is connected to the second elevator and comprises the rotating support 42 and the lift cage 40. The rotating support 42 is provided with elevator track sections 52 similar to track sections goods support arrangement 32 in the multilayer first elevator 30, c.f Fig. 3. A shuttle 34 is guided on the elevator track sections 52 when positioned on the multilayer first elevator 30. When the multilayer first elevator 30 is elevated or lowered to a position right in front of shuttle support 38, the shuttle 34 can move from the shuttle support 38 into the track sections of the goods support arrangement 32 in the multilayer first elevator 30 either to pick up goods or to place goods 14 on the track sections of the goods support arrangement 32.

As shown in Fig. 2, the mini load crane 20 is provided with wheels 54 that run on the floor of the warehouse. In various embodiments, the wheels run on a beam 56 that is mounted horizontally on the floor of the warehouse. The wheels 54 can be arranged separately or together in a bogie. A similar arrangement can be used to guide the mini load crane 20 at the top or at another vertical position. The wheels can be driven by two motors 55 through a gearbox to reduce the play. In such an embodiment, one motor is used to provide a torque against the other.

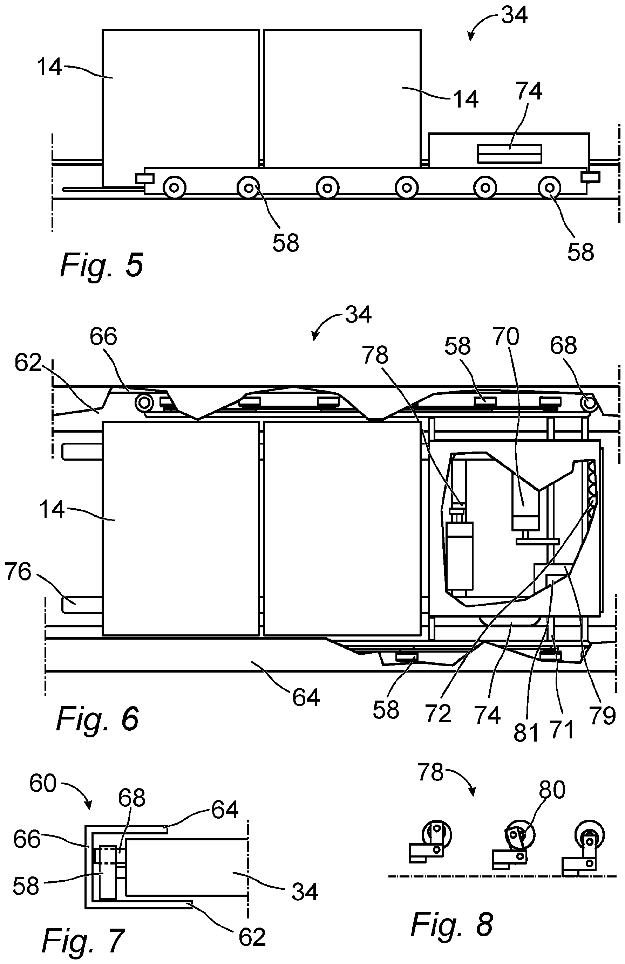

The embodiment of the shuttle 34 shown in Fig. 5 and Fig. 6 is designed to pick up, support and place goods 14. The shuttle 34 runs on a plurality of support wheels 58 that will run on the multilayer elevator track sections 52 and on storage tracks 17 in the racks. The storage tracks 17 and the multilayer elevator track sections 52 are support beams 60 with a laying U-shape arranged with a lower horizontal flange 62, an upper horizontal flange 64, and a vertical web 66, c.f. Fig. 7. The upper flange 64 extends a shorter distance from the web 66 than does the lower flange 62. The shuttle 34 is guided on the support beams 60 by guide wheels 68 that engage the web 66 when the shuttle 34 runs on the support beams 60.

The shuttle 34 is propelled by an electric motor 70 which can be powered by a set of capacitors 72. The capacitors 72 are charged through a current collector 74 that engages a current path (not shown) in the mini load crane 20 when the shuttle 34 is positioned in the mini load crane 20. The electric motor 70 drives a shaft 71 connected to the support wheels 58. The shuttle 34 is provided with an elongated lift fork 76 that will support the goods 14 during transport. An onboard control device 79 comprising a wireless communication unit 81 controls the movements and actions of the shuttle 34, partly based on instruction signals transmitted from the crane control unit 33. In various embodiments, the wireless communication unit 81 communicates with the crane control unit 33 through a Bluetooth link.

The shuttle 34 is also provided with a lifting mechanism 78 for raising goods above and lowering goods on the support beams 60 or rails in the racks and on the track sections of the goods support arrangement 32 in the multilayer elevator 30. In various embodiments, the lifting mechanism 78 comprises an eccentric rotating roll 80 that is connected to the lift fork 76, c.f. Fig. 8. A maximum raised position is shown to the left, a center position in the middle, and a lowest position to the right. In various embodiments, the shuttle has a weight of approximately 10 kg, and the electric motor 70 will give the shuttle a working speed of approximately 1 m/s while carrying goods 14 of a weight of 25 kg.

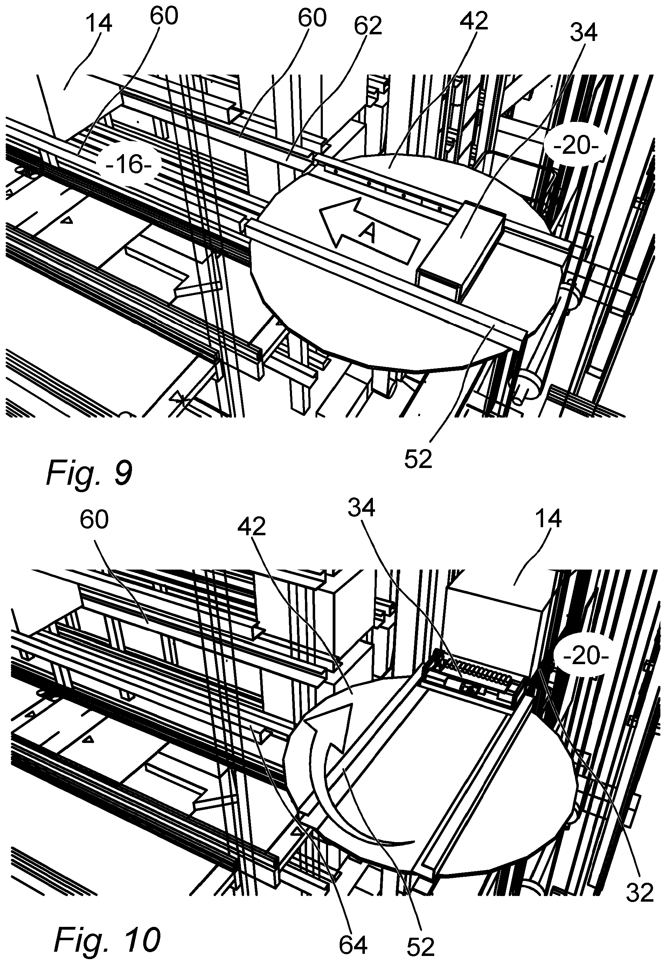

In Fig. 9 the shuttle 34 is positioned on the rotating support 42 in front of support beams 60 of the rack 16. The shuttle 34 will move in the direction of the arrow A into the rack 16 to pick up goods 14. Fig. 10 shows the shuttle carrying goods 14 and moving into the mini load crane 20. In Fig. 10, the rotating support 42 has been rotated 90° before a movement of the shuttle 34 into the multilayer elevator is initiated. The racks 16 and the goods support arrangement 32 of the mini load crane 20 are provided with support beams 60 and track sections, respectively. There are also similar track sections 52 on the rotating support 42.

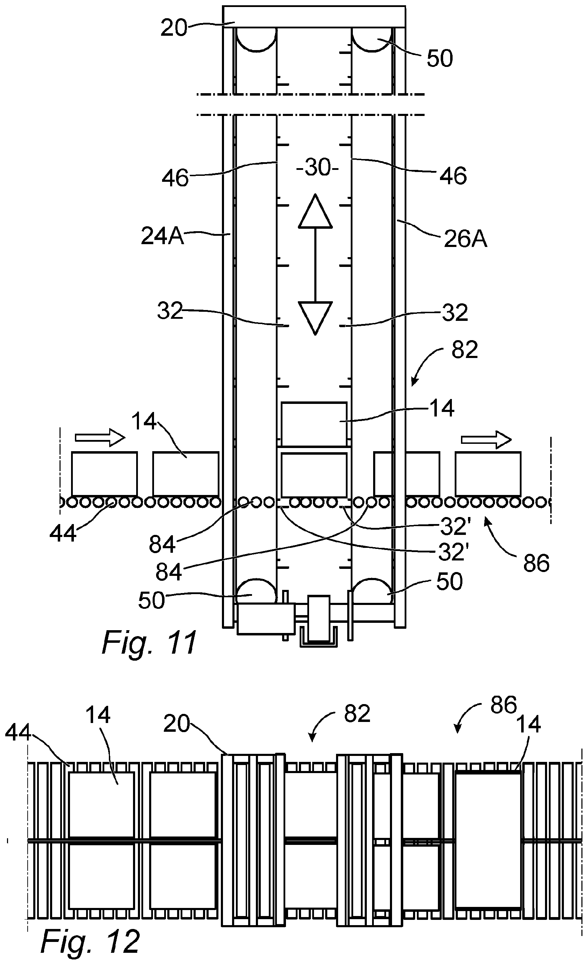

Fig. 11 and Fig. 12 show schematically an arrangement for loading and unloading the automated warehouse using the mini load crane 20. In these figures, the rotating support 42 is omitted. The first set of endless belts 46 extends around pulleys 50 and supports a plurality of goods support track sections 32. Goods 14 is transported into the automated warehouse by a conveyor system comprising rollers 44. The conveyor system extends through an exchange or reload area 82, and the mini load crane 20 can move into this area for receiving and delivering goods 14. The conveyor system can be split into two sections running in parallel. This will allow conveying of goods of half or smaller width separately. When goods of full width are transported both sections will run synchronously.

Goods 14 is conveyed into the reload area 82 where the mini load crane 20 can be positioned. The goods 14 will be conveyed first by the rollers 44 of the conveyer and then by crane rollers 84 to a position in the center of the mini load crane 20. During movement of the goods 14 into the central position of the mini load crane 20, the first set of endless belts 46 is positioned in the vertical direction where goods support track sections 32 are right below a bottom side of the goods 14. When the goods are in the central position, the pulleys 50 are activated to move the first set of endless belts 46, so as to lift goods support track sections 32' from a position just below the goods 14 to a position where the goods 14 are supported on the goods support track sections 32'. In various embodiments, the crane rollers 84 are mounted between driving portions and return portions of the first set of endless belts 46.

By further rotation of the pulleys 50, the first set of endless belts 46 will raise the goods support track sections 32' supporting the goods 14 to an elevated position. It is then possible to activate the conveyors and rollers to move another object to the central position. A reverse function is used to unload goods 14 from the mini load crane 20 to an output conveyor 86. When unloading goods 14, the goods support track sections 32' supporting the goods 14 will be lowered to a position where the goods 14 are supported on the rollers of the conveyors and then moved out from the mini load crane 20 by crane rollers 84.

The multilayer elevator 30 of the mini load crane 20 can carry goods 14 on a plurality of levels. As a result, goods 14 can be stored intermediately on the mini load crane 20 during storing of goods in the automated warehouse as well as during unloading of goods. This will reduce the number of movements of the mini load crane 20, because the mini load crane 20 can remain in one position for receiving a plurality of containers or boxes and then move with all the goods stored in the multilayer elevator 30 to positions in the automated warehouse where the goods are transported by the shuttle 34 to selected positions in the racks. Goods 14 picked up by the shuttle 34 in the racks 16 can be placed at any level of the multilayer elevator 30 where there is free space. A suitable level is chosen by operating the multilayer elevator 30 correspondingly.

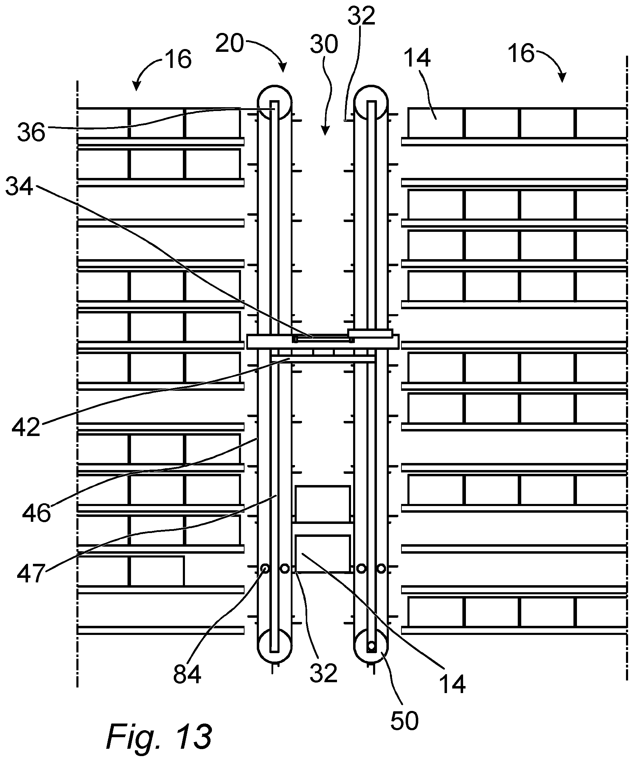

The schematic view in Fig. 13 shows a mini load crane 20 in position in the automated warehouse between two racks 16. The racks 16 contain goods 14 at different levels. The mini load crane 20 supports two pieces of goods 14 that are supported on goods support track section 32 on the first set of endless belts 46 that are part of the multilayer elevator 30. The first set of endless belts 46 runs over the pulleys 50. The shuttle 34 is placed on the rotating support 42 above the goods 14. The rotating support 42 is connected to the second set of endless belts 47 that are part of the goods elevator 36. As shown in Fig. 13, the crane rollers 84 are supported by the mini load crane 20.

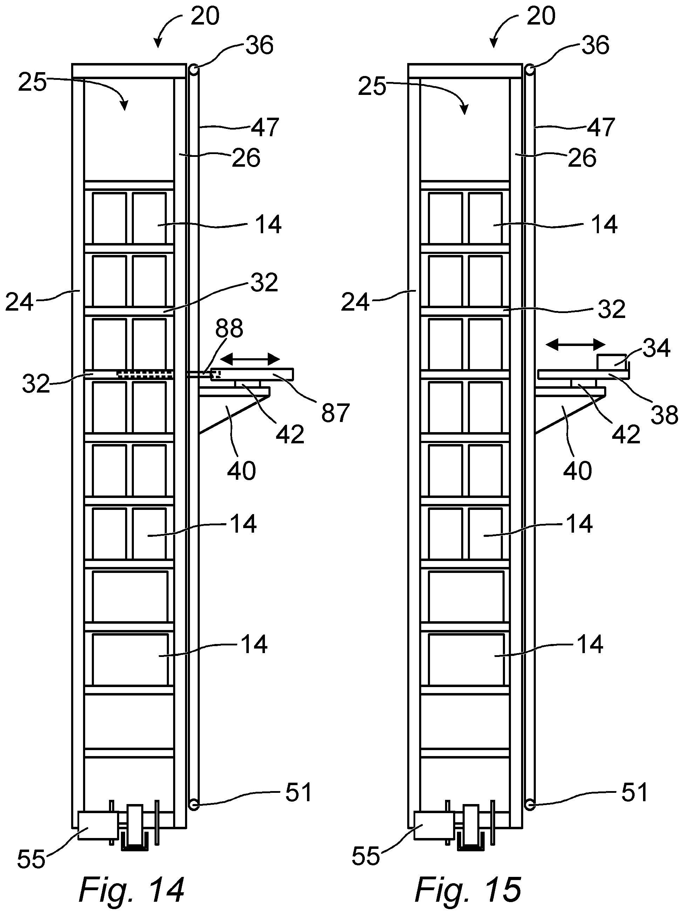

In the alternative not according to the invention the mini load crane shown in Fig. 14 and Fig. 15, the multilayer intermediate storage device 25 is provided with goods support arrangements, or track sections, 32 at fixed levels. The elevator endless belts 47 supports the lift cage 40 and the rotating support 42, and are operated to move the lift cage 40 and the rotating support 42 up and down to different vertical positions. The vertical positions will correspond to the fixed levels of the multilayer intermediate storage device 25, and also to the levels of the storage tracks 17 in the racks 16.

Not according to the invention, as shown in Fig. 14, no shuttle is provided. Instead, a goods transporter 87 is provided on the rotating support 42. The goods transporter 87 comprises reciprocating means that can be extended into the goods support track sections 32 to place goods in and retracted to collect goods from the multilayer intermediate storage device 25. Goods 14 can also be placed and collected in storage tracks 17 in the racks 16. In this embodiment, the rows 12 of racks 16 preferably have a length corresponding to an operating length of the reciprocating means, allowing the reciprocating means to reach all positions in the racks 16 where goods can be stored.

Not according to the invention, the disclosed mini load crane 20 shown in Fig. 15, the multilayer intermediate storage device 25 is provided with goods support arrangements 32 at fixed levels. The elevator endless belts 47 supports the lift cage 40 and the rotating support 42, and are operated to move the lift cage 40 and the rotating support 42 up and down to different vertical positions. The vertical positions will correspond to the fixed levels of the multilayer intermediate storage device 25, and also to the levels of the. The shuttle support 38 is supported on the lift cage 40 and carries a shuttle 34 having the same functionality as the described above.

Not according to the invention, as shown in Fig. 14 and Fig. 15 loading of the warehouse will be handled somewhat different from what is described above. Goods 14 from the conveyor 22 will be picked up by the goods transporter 87 and the shuttle 34, respectively, in the exchange or reload area 82 and raised to a vertical position where there is free space in the multilayer intermediate storage device 25. The rotating support 42 is rotated 90 degrees, and the goods 14 will be placed at a selected level and position in the multilayer intermediate storage device 25. More goods then can be picked up from the conveyor 22. The number of levels occupied by goods in connection with loading and unloading of goods may depend on intended selected goods positions in the racks, so as to use the mini load crane 20 in an efficient way and reduce movements of the mini load crane 20. In various embodiments, the goods transporter 87 comprises a telescopic device 88 that is extendable to reach goods 14 stored in the multilayer intermediate storage device 25 and in the rows 12 of the automated warehouse.

When a desired set of goods 14 has been collected from the conveyor system and placed in the multilayer intermediate storage device 25, the mini load crane 20 will be moved from the exchange or reload area 82 with the goods to a first position in front of a row 12 of the automated warehouse. Goods are picked up at a selected vertical position in the multilayer intermediate storage device 25. The rotating support 42 is rotated 90 degrees, and the goods 14 will be placed at a selected level and position in the row of the automated warehouse. More goods then can be picked up from the multilayer intermediate storage device 25 by repeating this process. A reversed procedure is used for unloading of goods from the automated warehouse.

## Claims

1. A mini load crane (20) for use in an automated warehouse (10) having a plurality of rows (12), wherein the rows (12) extend vertically in a plurality of levels, and are arranged in parallel in a horizontal direction to form a rack (16), said mini load crane (20) comprising
a first vertical side section (24) and a second vertical side section (26) spaced apart from and arranged in parallel with said first side section (24), said first vertical side section (24) and said second vertical side section (26) having a height;
a multilayer intermediate storage device (25) arranged in a vertical space between said first vertical side section (24) and said second vertical side section (26), wherein each level of said multilayer intermediate storage device (25) is provided with a goods support device (32);
a goods elevator (36) extending along and outside said vertical space, wherein the goods elevator (36) is arranged to be moved vertically and stopped at different levels in line with the levels of the rack (16) for picking up and storing goods (14) in the rack (16), and at different levels in line with the levels of said multilayer intermediate storage device (25) for picking up and storing goods (14) in the multilayer intermediate storage device (25); and
at least one motor (55) for moving the mini load crane (20) along the rack (16) and perpendicularly to the rows (12);
**characterized in that**:
the multilayer intermediate storage device (25) comprises a multilayer first elevator (30);
wherein the goods elevator (36) comprises a shuttle support (38) for a shuttle (34), and wherein the shuttle support (38) at each of the goods elevator (36) stop levels is in line with the levels of the rack (16) for allowing the shuttle (34) to move into and out from the rack (16);
wherein each level of said multilayer intermediate storage device (25) comprises a support track for a shuttle (34), so as to allow the shuttle (34) to move from the shuttle support (38) into said multilayer intermediate storage device (25) for placing goods (14) on the goods supports (32) and for retrieving goods (14) from the goods supports (32); and
wherein said goods elevator (36) comprises a lift cage (40) and a rotating support (42) arranged to rotate at least 90 degrees between a first position where the shuttle support (38) of the goods elevator (36) is in line with the support track of the multilayer intermediate storage device (25), and a second position where the shuttle support (38) of the goods elevator (36) is in line with storage tracks of the racks (16), so as to allow the shuttle (34) to move into and out of the multilayer intermediate storage device (25), and into and out of the rack (16), respectively.

2. The mini load crane (20) of claim 1, wherein the multilayer first elevator (30) comprises a first set of belts (46) supporting evenly spaced goods support track sections extending in a horizontal direction, wherein one pair of opposing goods support track sections constitutes one level of the mini load crane (20).

3. The mini load crane (20) of claim 2, wherein the first set of belts (46) are endless belts looped over upper and lower pulleys (50) and extending over at least a substantial part of the height of said first vertical side section (24) and said second vertical side section (26).

4. The mini load crane (20) of claim 1, wherein the number of levels of the mini load crane (20) is at least six.

5. The mini load crane (20) of claim 1, wherein horizontal crane rollers (84) are provided a lower part of the mini load crane (20) for conveying goods (14) to a central position of the mini load crane (20).

6. The mini load crane (20) of claim 5, wherein said horizontal crane rollers (84) are provided between a driving portion of the belts of said first set of belts (46), and a return portion thereof.

7. The mini load crane (20) of claim 1, wherein said goods elevator (36) comprises elevator endless belts (47) supported and driven by a first set of drive wheels arranged at a top section of the mini load crane (20), and a second set of drive wheels arranged at a bottom section of the mini load crane (20).

8. A method for storing and picking goods (14) in an automated warehouse (10) having a plurality of rows (12), wherein the rows (12) extend vertically in a plurality of levels, and are arranged in parallel in a horizontal direction to form a rack (16), comprising
placing goods (14) using a shuttle in a goods elevator (36) extending exterior on a mini load crane (20);
vertically moving the goods elevator (36) to vertical positions corresponding to free spaces in a multilayer intermediate storage device (25) extending vertically inside said mini load crane (20);
rotating a rotating support of the goods elevator to allow the shuttle to move into the multilayer intermediate storage device (25);
moving the goods (14) horizontally using a shuttle from the goods elevator (36) to a position in the multilayer intermediate storage device (25) for placing the goods (14);
moving the mini load crane (20) in a horizontal direction to a selected row of the automated warehouse (10);
vertically moving a multilayer first elevator (30) of the multilayer intermediate storage device (25) to align a selected level of the multilayer intermediate storage device with the shuttle;
picking up goods (14) using the shuttle from a selected horizontal position in the multilayer intermediate storage device (25);
vertically moving the goods elevator (36) to a vertical position corresponding to a free space in the rack (16);
rotating the rotating support of the goods elevator to allow the shuttle to move into the rack (16);
placing the goods (14) using the shuttle in the free space in the rack (16); and
repeating the above steps in a reversed order for picking goods (14) from the rack (16).

## Patentansprüche

1. Minilastkran (20) zur Verwendung in einer automatisierten Lagerhalle (10), die eine Vielzahl von Reihen (12) aufweist, wobei sich die Reihen (12) in einer Vielzahl von Etagen vertikal erstrecken und in einer horizontalen Richtung parallel angeordnet sind, um ein Gestell (16) auszubilden, der Minilastkran (20) umfassend
einen ersten vertikalen Seitenabschnitt (24) und einen zweiten vertikalen Seitenabschnitt (26), der von dem ersten Seitenabschnitt (24) beabstandet und parallel mit diesem angeordnet ist, wobei der erste vertikale Seitenabschnitt (24) und der zweite vertikale Seitenabschnitt (26) eine Höhe aufweisen;
eine Zwischenlagervorrichtung (25) mit mehreren Ebenen, die in einem vertikalen Raum zwischen dem ersten vertikalen Seitenabschnitt (24) und dem zweiten vertikalen Seitenabschnitt (26) angeordnet ist, wobei jede Etage der Zwischenlagervorrichtung (25) mit mehreren Ebenen mit einer Warenträgervorrichtung (32) versehen ist;
einen Warenaufzug (36), der sich entlang und außerhalb des vertikalen Raums erstreckt, wobei der Warenaufzug (36) angeordnet ist, um auf unterschiedlichen Etagen in Übereinstimmung mit den Etagen des Gestells (16) zum Aufnehmen und Lagern von Waren (14) in dem Gestell (16), und auf unterschiedlichen Etagen in Übereinstimmung mit den Etagen der Zwischenlagervorrichtung (25) mit mehreren Ebenen zum Aufnehmen und Lagern von Waren (14) in der Zwischenlagervorrichtung (25) mit mehreren Ebenen vertikal bewegt und angehalten zu werden; und
mindestens einen Motor (55) zum Bewegen des Minilastkrans (20) entlang des Gestells (16) und senkrecht zu den Reihen (12);
**dadurch gekennzeichnet, dass**:
die Zwischenlagervorrichtung (25) mit mehreren Ebenen einen ersten Aufzug (30) mit mehreren Ebenen umfasst;
wobei der Warenaufzug (36) einen Shuttle-Träger (38) für einen Shuttle (34) umfasst und wobei der Shuttle-Träger (38) auf jeder der Halteetagen des Warenaufzugs (36) in Übereinstimmung mit den Etagen des Gestells (16) ist, zum Ermöglichen des Shuttles (34), sich in das Gestell (16) hinein und aus diesem heraus zu bewegen;
wobei jede Etage der Zwischenlagervorrichtung (25) mit mehreren Ebenen eine Trägerbahn für einen Shuttle (34) aufweist, um es dem Shuttle (34) zu ermöglichen, sich von dem Shuttle-Träger (38) in die Zwischenlagervorrichtung (25) mit mehreren Ebenen hinein zu bewegen, zum Platzieren von Waren (14) auf die Warenträger (32) und zum Zurückholen von Waren (14) von den Warenträgern (32); und
wobei der Warenaufzug (36) einen Fahrstuhl (40) und einen Drehträger (42) umfasst, der angeordnet ist, um sich um mindestens 90 Grad zwischen einer ersten Position, wo der Shuttle-Träger (38) des Warenaufzugs (36) in Übereinstimmung mit der Trägerbahn der Zwischenlagervorrichtung (25) mit mehreren Ebenen ist, und einer zweiten Position, wo der Shuttle-Träger (38) des Warenaufzugs (36) in Übereinstimmung mit den Lagerbahnen des Gestells (16) ist, zu drehen, um es dem Shuttle (34) zu ermöglichen, sich in die Zwischenlagervorrichtung (25) mit mehreren Ebenen hinein und aus dieser heraus und in das Gestell (16) hinein und aus diesem heraus zu bewegen.

2. Minilastkran (20) nach Anspruch 1, wobei der erste Aufzug (30) mit mehreren Ebenen einen ersten Satz von Riemen (46) umfasst, die gleichmäßig beabstandete Warenträgerbahnabschnitte tragen, die sich in einer horizontaler Richtung erstrecken, wobei ein Paar von gegenüberliegenden Warenträgerbahnabschnitten eine Etage des Minilastkrans (20) bildet.

3. Minilastkran (20) nach Anspruch 2, wobei der erste Satz von Riemen (46) aus Endlosriemen besteht, die über obere und untere Scheiben (50) geschlungen sind und sich über mindestens einen wesentlichen Teil der Höhe des ersten vertikalen Seitenabschnitts (24) und des zweiten vertikalen Seitenabschnitts (26) erstrecken.

4. Minilastkran (20) nach Anspruch 1, wobei die Anzahl von Etagen des Minilastkrans (20) mindestens sechs beträgt.

5. Minilastkran (20) nach Anspruch 1, wobei horizontale Kranrollen (84) an einem unteren Teil des Minilastkrans (20) zum Befördern von Waren (14) zu einer zentralen Position des Minilastkrans (20) bereitgestellt sind.

6. Minilastkran (20) nach Anspruch 5, wobei die horizontalen Kranrollen (84) zwischen einem Antriebsstück der Riemen des ersten Satzes von Riemen (46) und einem Rücklaufstück davon bereitgestellt sind.

7. Minilastkran (20) nach Anspruch 1, wobei der Warenaufzug (36) Aufzugsendlosriemen (47) umfasst, die durch einen ersten Satz von Antriebsrädern, die an einem obersten Abschnitt des Minilastkrans (20) angeordnet sind, und einen zweiten Satz von Antriebsrädern, die an einem untersten Abschnitt des Minilastkrans (20) angeordnet sind, getragen und angetrieben werden.

8. Verfahren zum Lagern und Nehmen von Waren (14) in einer automatisierten Lagerhalle (10), die eine Vielzahl von Reihen (12) aufweist, wobei sich die Reihen (12) in einer Vielzahl von Etagen vertikal erstrecken und in einer horizontalen Richtung parallel angeordnet sind, um ein Gestell (16) auszubilden, umfassend
Platzieren von Waren (14) unter Verwendung eines Shuttles in einem Warenaufzug (36), der sich extern an einem Minilastkran (20) erstreckt;
vertikales Bewegen des Warenaufzugs (36) in vertikale Positionen, die freien Räumen in einer Zwischenlagervorrichtung (25) mit mehreren Ebenen entsprechen, die sich innerhalb des Minilastkrans (20) vertikal erstreckt;
Drehen eines Drehträgers des Warenaufzugs, um dem Shuttle zu ermöglichen, sich in die Zwischenlagervorrichtung (25) mit mehreren Ebenen hinein zu bewegen;
horizontales Bewegen der Waren (14) unter Verwendung eines Shuttles von dem Warenaufzug (36) in eine Position in der Zwischenlagervorrichtung (25) mit mehreren Ebenen zum Platzieren der Waren (14);
Bewegen des Minilastkrans (20) in einer horizontalen Richtung zu einer ausgewählten Reihe der automatisierten Lagerhalle (10);
vertikales Bewegen eines ersten Aufzugs (30) mit mehreren Ebenen der Zwischenlagervorrichtung (25) mit mehreren Ebenen, um eine ausgewählte Etage der Zwischenlagervorrichtung mit mehreren Ebenen mit dem Shuttle auszurichten;
Aufnehmen von Waren (14) unter Verwendung des Shuttles von einer ausgewählten horizontalen Position in der Zwischenlagervorrichtung (25) mit mehreren Ebenen;
vertikales Bewegen des Warenaufzugs (36) in eine vertikale Position, die einem freien Raum in dem Gestell (16) entspricht;
Drehen des Drehträgers des Warenaufzugs, um dem Shuttle zu ermöglichen, sich in das Gestell (16) hinein zu bewegen;
Platzieren der Ware (14) unter Verwendung des Shuttles in dem freien Raum in dem Gestell (16); und Wiederholen der obigen Schritte in einer umgekehrten Reihenfolge zum Nehmen von Waren (14) von dem Gestell (16).

## Revendications

1. Mini grue de chargement (20) destinée à être utilisée dans un entrepôt automatisé (10) ayant plusieurs rangées (12), dans laquelle les rangées (12) s'étendent verticalement sur plusieurs niveaux et sont disposées parallèlement dans une direction horizontale pour former une crémaillère (16), ladite mini grue de chargement (20) comprenant
une première section latérale verticale (24) et une seconde section latérale verticale (26) espacée et disposée parallèlement à ladite première section latérale (24), ladite première section latérale verticale (24) et ladite seconde section latérale verticale (26) ayant une hauteur ;
un dispositif de stockage intermédiaire multicouche (25) disposé dans un espace vertical entre ladite première section latérale verticale (24) et ladite seconde section latérale verticale (26), dans laquelle chaque niveau dudit dispositif de stockage intermédiaire multicouche (25) est pourvu d'un dispositif de support de marchandises (32) ;
un monte-charge (36) s'étendant le long et à l'extérieur dudit espace vertical, dans laquelle le monte-charge (36) est conçu pour se déplacer verticalement et s'arrêter à différents niveaux alignés avec les niveaux de la crémaillère (16) pour prendre et stocker des marchandises (14) dans la crémaillère (16), et à différents niveaux alignés avec les niveaux dudit dispositif de stockage intermédiaire multicouche (25) pour prendre et stocker des marchandises (14) dans le dispositif de stockage intermédiaire multicouche (25) ; et
au moins un moteur (55) pour déplacer la mini-grue de chargement (20) le long de la crémaillère (16) et perpendiculairement aux rangées (12) ;
**caractérisée en ce que** :
le dispositif de stockage intermédiaire multicouche (25) comprend un premier élévateur multicouche (30) ;
dans laquelle le monte-charge (36) comprend un support de navette (38) pour une navette (34), et dans laquelle le support de navette (38) à chacun des niveaux d'arrêt du monte-charge (36) est aligné avec les niveaux de la crémaillère (16) pour permettre à la navette (34) de se déplacer dans et hors de la crémaillère (16) ;
dans laquelle chaque niveau dudit dispositif de stockage intermédiaire multicouche (25) comprend un rail de support pour une navette (34), de manière à permettre à la navette (34) de se déplacer du support de navette (38) dans ledit dispositif de stockage intermédiaire multicouche (25) pour placer des marchandises (14) sur les supports de marchandises (32) et pour récupérer des marchandises (14) des supports de marchandises (32) ; et
dans laquelle ledit monte-charge (36) comprend une cabine d'ascenseur (40) et un support rotatif (42) conçu pour tourner au moins de 90 degrés entre une première position dans laquelle le support de navette (38) du monte-charge (36) est aligné avec le rail de support du dispositif de stockage intermédiaire multicouche (25), et une seconde position dans laquelle le support de navette (38) du monte-charge (36) est aligné avec les rails de stockage des crémaillères (16), de manière à permettre à la navette (34) de se déplacer dans et hors du dispositif de stockage intermédiaire multicouche (25), et dans et hors de la crémaillère (16), respectivement.

2. Mini grue de chargement (20) selon la revendication 1, dans laquelle le premier élévateur multicouche (30) comprend un premier ensemble de courroies (46) supportant des sections de rails de support de marchandises équitablement espacées s'étendant dans une direction horizontale, dans laquelle une paire de sections de rails de support de marchandises opposées constitue un niveau de la mini-grue de chargement (20).

3. Mini grue de chargement (20) selon la revendication 2, dans laquelle le premier ensemble de courroies (46) sont des courroies sans fin bouclées sur des poulies supérieures et inférieures (50) et s'étendant sur au moins une partie importante de la hauteur de ladite première section latérale verticale (24) et de ladite seconde section latérale verticale (26).

4. Mini grue de chargement (20) selon la revendication 1, dans laquelle le nombre de niveaux de la mini grue de chargement (20) est d'au moins six.

5. Mini grue de chargement (20) selon la revendication 1, dans laquelle des rouleaux de grue horizontaux (84) sont prévus dans la partie inférieure de la mini grue de chargement (20) pour transporter des marchandises (14) vers une position centrale de la mini grue de chargement (20).

6. Mini-grue de chargement (20) selon la revendication 5, dans laquelle les rouleaux de grue horizontaux (84) sont prévus entre une partie motrice des courroies du premier ensemble de courroies (46) et une partie de retour de ces courroies.

7. Mini grue de chargement (20) selon la revendication 1, dans laquelle ledit monte-charge (36) comprend des courroies sans fin (47) supportées et entraînées par un premier ensemble de roues motrices disposées dans une section supérieure de la mini grue de chargement (20), et un second ensemble de roues motrices disposées dans une section inférieure de la mini grue de chargement (20).

8. Procédé de stockage et de prélèvement de marchandises (14) dans un entrepôt automatisé (10) ayant plusieurs rangées (12), dans lequel les rangées (12) s'étendent verticalement sur plusieurs niveaux et sont disposées parallèlement dans une direction horizontale pour former une crémaillère (16), comprenant
le placement de marchandises (14) à l'aide d'une navette dans un monte-charge (36) s'étendant à l'extérieur sur une mini-grue de chargement (20) ;
le déplacement vertical du monte-charge (36) vers des positions verticales correspondant à des espaces libres dans un dispositif de stockage intermédiaire multicouche (25) s'étendant verticalement à l'intérieur de ladite mini-grue de chargement (20) ;
la rotation d'un support rotatif du monte-charge pour permettre à la navette de se déplacer dans le dispositif de stockage intermédiaire multicouche (25) ;
le déplacement des marchandises (14) horizontalement à l'aide d'une navette du monte-charge (36) vers à une position dans le dispositif de stockage intermédiaire multicouche (25) pour y placer les marchandises (14) ;
le déplacement de la mini grue de chargement (20) dans une direction horizontale jusqu'à une rangée sélectionnée de l'entrepôt automatisé (10) ;
le déplacement vertical d'un premier élévateur multicouche (30) du dispositif de stockage intermédiaire multicouche (25) afin d'aligner un niveau sélectionné du dispositif de stockage intermédiaire multicouche avec la navette ;
le prélèvement de marchandises (14) à l'aide de la navette à partir d'une position horizontale sélectionnée dans le dispositif de stockage intermédiaire multicouche (25) ;
le déplacement vertical du monte-charge (36) jusqu'à une position verticale correspondant à un espace libre dans la crémaillère (16) ;
la rotation du support rotatif du monte-charge pour permettre à la navette de se déplacer dans la crémaillère (16) ;
le placement des marchandises (14) à l'aide de la navette dans l'espace libre de la crémaillère (16) ; et la répétition des étapes ci-dessus dans l'ordre inverse pour prélever des marchandises (14) de la crémaillère (16).
